# EUROPEAN PATENT APPLICATION

(11) **EP 4 163 568 A1**
(43) Date of publication of application: **12.04.2023**
(21) Application number: 22200109.1
(22) Date of filing: 06.10.2022
(51) Int. Cl.: F24F 13/02, F16L 59/10

(54) **THERMALLY INSULATED METAL DUCT SYSTEMS**

(30) Priority: 08.10.2021 GB 202114425
(71) Applicant: Knauf Insulation srl, 4600 Visé (BE)
(72) Inventor: Di Lenardo, Renata, 4220 Skofja Loca (SI)
(74) Representative: ARC-IP

(57) **Abstract**

A duct section having an interior air duct passageway extending along a lengthwise axis between first and second ends of the duct section comprises:
- an metal duct section having an external periphery which extends lengthwise between the first and second ends of the duct section;
- a mineral wool thermal insulation sheathing which overlays the external periphery of the metal duct section; and
- a mineral wool stiffener secured to the external periphery of the metal duct section and configured to prevent deformation of a portion of the length of the duct section when subjected to fire conditions.

## Description

This invention relates to duct systems, particularly HVAC duct systems and more particularly to fire-rated, thermally insulated metal HVAC duct systems.

HVAC duct systems are used in buildings for heating, ventilation and air conditioning, notably for controlled circulation of ventilating and/or temperature-controlled air. Within such buildings, building partitions, for example walls and floors, are often used to divide space within the building into individual compartments with such partitions being configured to prevent fire and smoke propagation between such compartments. For example, a fire escape corridor may be provided by such a compartment. One challenge associated with HVAC duct systems is to ensure that when a duct section passes between building compartments through an opening in a fire rated building partition, this does not provide a weakness to the desired fire propagation control.

One recognised weakness with duct sections that pass through an opening in a partition is a tendency for expansion of a metal duct section when subjected to fire conditions to cause deformation and/or collapse of the duct section and for this to create gaps between the duct and the partition through which fire, heat and smoke can pass. Consequently, duct sections that pass through partitions are often reinforced to reduce such deformation and collapse. For example, WO 2007/140780 A1 discloses a duct section having a metal duct section and a mineral wool thermal insulation sheathing which overlays an external periphery of the metal duct section in which elongate stiffening metal bar members are provided at a distance spaced from the metal duct section, the metal bar members being received within an elongated groove formed in the mineral wool thermal insulation sheathing. WO 2021/116411 A1 discloses a duct section configuration in which stiffening members are secured at each of the four external sides of a HVAC duct section adjacent to a position at which the duct section passes through an opening in a partition, each stiffening member comprising a gypsum bar arranged within a U-shaped steel profile.

One aim of the present invention is to provide improved duct sections and duct systems which alleviate the aforementioned issues and notably a duct section which allows for simpler installation.

In accordance with one of its aspects, the present invention provides a duct section as defined in claim 1. Additional aspects of the invention are defined in other independent claims. The dependent claims define preferred and/or alternative embodiments.

According to one aspect, the invention provides a duct section having an interior air duct passageway extending along a lengthwise axis between first and second ends of the duct section and comprising:
- a metal duct section having an external periphery which extends lengthwise between the first and second ends of the duct section;
- a mineral wool thermal insulation sheathing which overlays the external periphery of the metal duct section; and
- a stiffener secured to the external periphery of the metal duct section and configured to prevent deformation of a portion of the length of the duct section when subjected to fire conditions;
characterised in that
the stiffener comprises a mineral wool stiffener arranged at and secured to the external periphery of the metal duct section.

The duct section is preferably a HVAC duct section, notably a HVAC duct section having a fire class of at least EI 30. As used herein, the term fire class means the fire resistance class determined according to the applicable EN for the duct section, for example, tested according to EN 1366-1 and classified according to EN 13501-3, notably for fire resistance from inside and outside the duct including smoke leaks. The HVAC duct sections are configured to form part of a HVAC duct system, for example for circulating heat conditioned air and/or extracting air from within a building (e.g. for rooms, workspaces, living spaces, corridors and kitchens). In particular, the duct sections disclosed herein provide a portion of a duct system which is configured to pass through an opening in a partition (for example a wall, ceiling or floor of a building).

According to one of its aspects, the present invention is based on the realisation that stiffening of the duct section can be provided using a mineral wool stiffener. As used herein, the term "mineral wool stiffener" means a stiffener which reduces deformation of the metal duct section when exposed to fire conditions due to, preferably primarily due to, mechanical resistance to deformation provided by the mineral wool of the mineral wool stiffener. The dimensions, density and binder content of the mineral wool of the mineral wool stiffener are selected to provide the desired stiffening effect. The mineral wool stiffener is preferably the principal stiffener of the duct section, that is to say, that it is primarily and preferably entirely the mineral wool stiffener which provides the required stiffening to the duct section. Thus, the duct section preferably does not include metal stiffening rails, for example of the type disclosed in EP1865271, which are mechanically secured to the metal duct section. The use of a mineral wool stiffener facilitates installation and assembly of the duct section, facilitates supply logistics and provides a stiffener which, unlike a metal stiffener, is inherently resistant to deformation when subjected to fire conditions. Alternatively, the use of the mineral wool stiffener in combination with metal stiffening rails, notably metal stiffening rails mechanically secured to the metal duct section, may be used to enable the use of lighter, smaller or fewer metal stiffening rails than would otherwise be the case for achieving a desired fire class.

Preferably, the mineral wool stiffener consists of mineral wool, with the mineral wool comprising mineral wool fibres, preferably a binder and optional additives (for example, dedusting oil, water repellent additives, fire retardant additives). Alternatively, the mineral wool stiffener may comprise a non-metallic stiffening element, for example a heat resistant layer, for example provided by a silicate, a ceramic based adhesive or a fire-resistant material; in this case the mineral wool stiffener preferably consists of the aforementioned mineral wool and the non-metallic stiffening element. The non-metallic stiffening element may be provided at one or more surfaces of the mineral wool of the mineral wool stiffener and/or within the mineral wool of the mineral wool stiffener, for example as a layer sandwiched between portions of the mineral wool of the mineral wool stiffener.

Good levels of stiffening can be achieved with any of the following combinations of density, thickness and length for the mineral wool of the mineral wool stiffener:
- a density in the range 150 kg/m³ to 200 kg/m³, preferably 160 kg/m³ to 190 kg/m³; and
- a length which is at least 300 mm; and
- a thickness which is at least 20 mm, preferably at least 30 mm.
Increased length and/or increased thickness of the mineral wool of the mineral wool stiffener may be used to enhance its stiffening effect, notably when the desired fire class is greater than EI 30.

The mineral wool of the mineral wool stiffener and of the mineral wool thermal insulation sheathing is preferably rock mineral wool; this provides resistance to deformation under fire conditions. The mineral wool stiffener and the mineral wool thermal insulation sheathing preferably have a minimum melting point of 1000 °C as defined by and tested in accordance with DIN 4102 (Part 17); this provides suitable dimensional stability under fire conditions.

The mineral wool stiffener is preferably cut on the site where the duct section is to be installed from a strip or panel of mineral wool having a length and/or width greater than required for the mineral wool stiffener or mineral wool stiffener panels. This facilitates logistics. Absence of metal reinforcing bars as part of the mineral wool stiffener facilitates such cutting, for example using a knife or scissors.

The mineral wool thermal insulation sheathing preferably comprises an overlying mineral wool insulator which overlies the mineral wool stiffener in a radial direction; preferably the overlying mineral wool insulator overlies the entirety of the mineral wool stiffener. Initial testing and simulation has shown that suitable selection of the properties of the mineral wool stiffener and the mineral wool thermal insulation sheathing provides, in combination, a duct section for which a desirable fire class is achieved. Thus, the combinations set out in Table 1 may be used to achieve desired fire classes.

| Table 1 | | |
|---|---|---|
| Fire class | mineral wool stiffener | mineral wool thermal insulation sheathing and overlying mineral wool insulator |
| EI 30 | Consists of mineral wool having a density of 160 kg/m³ to 200 kg/m³, (preferably 170 kg/m³ to 190 kg/m³ and more preferably about 180kg/m³); thickness 20 mm - 40 mm (preferably about 30 mm) | density of 60 kg/m³ to 90 kg/m³ (preferably about 70 kg/m³); thickness 50 mm - 70 mm (preferably about 60 mm) - overlying mineral wool insulator half this thickness |
| EI 30 | Consists of mineral wool having a density of 160 kg/m³ to 200 kg/m³, (preferably 170 kg/m³ to 190 kg/m³ and more preferably about 180kg/m³); thickness 20 mm - 40 mm (preferably about 30 mm) | density of 60 kg/m³ to 90 kg/m³ (preferably about 70 kg/m³); thickness 90 mm - 110 mm (preferably about 100 mm) |
| EI 60 | Consists of mineral wool having a density of 160 kg/m³ to 200 kg/m³, (preferably 160 kg/m³ to 180 kg/m³ (preferably about 170 kg/m³); thickness 20 mm - 110 mm (preferably about 60 - 100 mm) | Density of 110 kg/m³ to 130 kg/m³ (preferably about 120 kg/m³); thickness 50 mm - 110 mm (preferably about 60 - 100 mm) |

It is particularly unexpected that a fire class of EI 30 or even EI 60 may be achieved for the duct section passing through an opening in a building partition without the use of metal stiffening rails secured to each face of the external surface of the metal duct at or immediately adjacent to the portion of the duct partition which passes through the opening.

Nevertheless, the duct system may further include one or more metal stiffening rails, notably to achieve a fire class of or of at least EI 60, particularly where the duct section comprises a rectangular cross sectioned metal duct section and is configured to pass through a wall partition. In this case, it is preferred for the duct system to include a single metal stiffening rail, for example in the form of a U profile; such a metal stiffening rail is preferably arranged at the external surface of the metal duct section across the width of the upper face of the metal duct section. Use of a single metal stiffening rail at a single face of the metal duct section (notably the upper face) simplifies assembly compared with know systems which require a metal stiffening profile at multiple faces (generally at all faces) of the metal duct section.

Preferably, an entire externally facing surface layer of the duct section is provided by the mineral wool thermal insulation sheathing and its overlying mineral wool insulator and has a homogeneous density of mineral wool; this facilitates assembly of the duct section through an opening in the partition and homogeneity with adjacent duct sections. In many cases, the metal duct section will be configured to have a rectangular cross section which is perpendicular to the lengthwise axis. In this case:
- the mineral wool stiffener preferably comprises four mineral wool panels, each of which is secured to a respective face of the external periphery of the metal duct section, notably at a position along the length of the duct section which is equidistant from each end of the duct section; and/or
- the mineral wool thermal insulation sheathing comprises a pair of mineral wool panels arranged at each of the four faces of the external periphery of the metal duct section (i.e. a total of eight mineral wool panels) with, at each face of the external periphery of the metal duct section, a first panel of the pair providing an insulating sheathing from a first end of the duct section to a central position of the mineral wool stiffener along that face and the second panel of the pair providing an insulating sheathing from a second end of the duct section to the central position of mineral wool stiffener along that face.
Arranging for a single panel along a face to provide the mineral wool thermal insulation sheathing (preferably including the overlying mineral wool insulator) from an end of the duct section to a central position of mineral wool stiffener along a face facilitates installation of the duct section through an opening in the building partition.

The externally facing surface of the mineral wool thermal insulation sheathing may have a facing, for example a scrim reinforced aluminium foil.

The mineral wool thermal insulation sheathing is secured in place in any suitable way, notably in any way typically used with such duct sections, for example using pins or mechanical fasteners to secure it to the metal duct section. In addition, tape or foil may be wrapped around an external surface of the mineral wool thermal insulation sheathing of the mineral wool duct.

The mineral wool of the mineral wool stiffener preferably has a higher density than the mineral wool of the mineral wool thermal insulation sheathing and a higher density than the mineral wool of the overlying mineral wool insulator (when present), notably a density that is higher by at least 10 kg/m³; this may be used to provide the mineral wool stiffener with a higher tensile strength (to facilitate resistance to deformation of the duct section at the position of the mineral wool stiffener during fire conditions) and/or to provide the mineral wool stiffener with a lower thermal conductivity A (as used herein, thermal conductivity A means that determined according to EN 12667, notably at 500 °C). Thus, the mineral wool stiffener may be used to provide enhanced resistance to temperature rise of the metal duct section which subjected to fire conditions from outside the duct section and thus lower deformation of the metal duct section at the position of the mineral wool stiffener.

The mineral wool stiffener is preferably continuous along its length (i.e. along the lengthwise axis of the duct section). The duct section is preferably configured so that the mineral wool stiffener passes through the partition and protrudes on each side of the partition by a distance in the range 100 mm - 300 mm, preferably 150 mm - 250 mm, along the lengthwise axis of the duct section; this provided the benefit of the mineral wool stiffener at a critical portion of the duct section to achieve a desired fire class i.e. the portions of the duct section which are adjacent to and which pass through the partition.

The mineral wool stiffener is secured to the external periphery of the metal duct section in a way which allows the mineral wool stiffener to resist fire induced deformation and/or collapse of the metal duct section. Preferably, the mineral wool is secured to the external periphery of the metal duct by an adhesive, preferably an inorganic adhesive, more preferably a ceramic based adhesive (for example an adhesive based on inorganic binders such as alkali silicates and/or metal phosphates with one of more fillers such as carbon, alumina, silica, magnesia or zirconia powder), particularly a ceramic based adhesive incorporating ceramic fibres, notably the adhesive being arranged between the external periphery (15) of the metal duct an a major surface (29) of the mineral wool stiffener (17) which faces towards the metal duct section (14). A silicate based adhesive may be used. This adhesive is preferably applied on site during assembly of the insulation around the metal duct section and installation of the thermally insulated duct section. This facilitates assembly and logistics.

Preferably, the mineral wool stiffener provides a continuous belt which encircles the external periphery of the metal duct section at at least one portion along its length; this provides good resistance to fire induced deformation of the duct section.

The metal duct section is preferably a steel duct section, notably a stainless-steel duct section; this provides suitable mechanical and corrosion resistance. The duct section should be self-supporting, for example being held in place by being attached at discrete positions along its length to part of a structure of a building, for example by spaced hangers attached to a ceiling of the building.

An embodiment of the invention will now be described, by way of example only, with reference to the accompanying drawings of which:
Fig.1 is a schematic cross section of a duct section;
Fig.2 is a schematic cross section taken along line 2-2 of Fig 1.

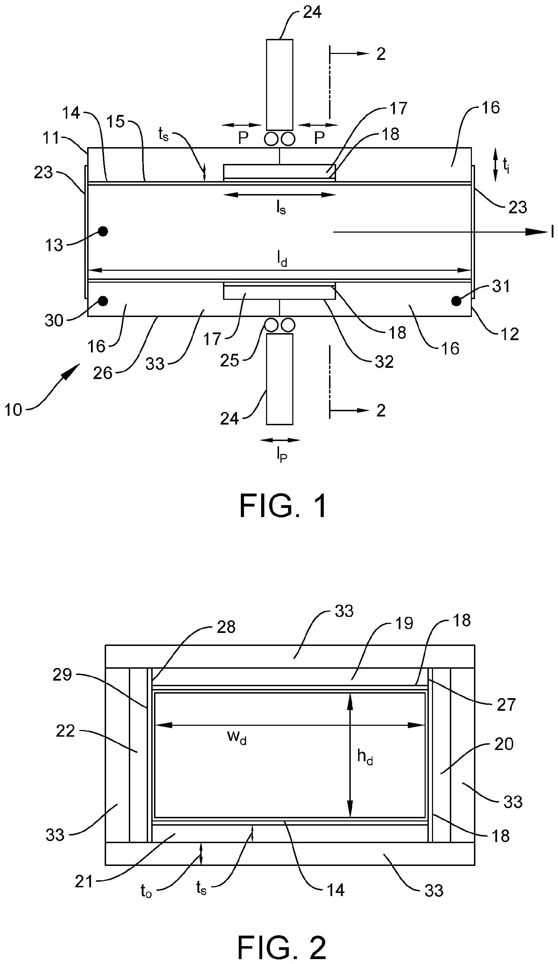

Fig 1 and Fig 2 illustrates a duct section 10 having an interior air duct passageway 13 extending along a lengthwise axis I between first 11 and second 12 ends of the duct section and comprising:
- a stainless steel metal duct section 14 (sheet steel thickness 0.7 mm) having an external periphery 15 which extends lengthwise between the first 11 and second ends 12 of the duct section;
- a mineral wool thermal insulation sheathing 16 which overlays the entire external periphery 15 of the metal duct section; and
- a mineral wool stiffener 17 secured to the external periphery of the metal duct section by a stiffener adhesive 18.

As can be seen in Fig 2, the duct section 10 has a rectangular cross section in a direction perpendicular to the lengthwise axis I and the mineral wool stiffener 17 comprises four mineral wool stiffener panels 19, 20, 21, 22, each of which is secured by stiffener adhesive 18 to a respective face of the external periphery of the metal duct section 14. The four mineral wool stiffener panels 19, 20, 21, 22 together provide a continuous mineral wool stiffener belt which encircles the external periphery 15 of the metal duct section at a portion situated mid-way along its length. The length lₛ of the mineral wool stiffener 17 in the direction along the lengthwise axis I of duct section 10 is 500 mm and its thickness tₛ in a direction perpendicular the lengthwise axis I is 30mm. The mineral wool stiffener passes through the partition wall 24 and is preferably arranged centrally in the lengthwise direction with respect to the opening in the partition. In the illustrated example, the mineral wool stiffener protrudes on each side of the partition wall 24 by a distance p of 200 mm along the lengthwise axis of the duct section. The stiffener belt is formed by: providing a strip of the mineral wool from which the stiffener panels are to be cut, the strip having a width of about 1.2m to 1.6m and a length of 500 mm (i.e. corresponding to the desired length lₛ of the mineral wool stiffener 17); cutting each of the four mineral wool stiffener panels 19, 20, 21, 22 from the strip of mineral wool; applying a ceramic based adhesive to one side of each of the four mineral wool stiffener panels 19, 20, 21, 22 and then securing each of the four mineral wool stiffener panels to a respective face of the external periphery of the metal duct section using the ceramic based adhesive. The ceramic based adhesive is applied at a thickness of about 5mm, preferably in spaced strips extending in the lengthwise direction of each of the mineral wool stiffeners. The ceramic based adhesive transfers tensile and compressive forces to the mineral wool stiffener from the external periphery of the metal duct section. It may also provide some stiffening itself to heat induced deformation of the metal duct section. The four mineral wool stiffener panels 19, 20, 21, 22 are arranged such that, at each corner of the rectangular cross section of the metal duct section 14, an abutment 27 is provided between an edge surface 28 of one of the mineral wool stiffener panels and a major surface 29 of an adjacent mineral wool stiffener panel, preferably with the said mineral wool stiffener panels being secured together at this abutment, for example with the ceramic based adhesive or with mechanical fasteners.

Each of the first 11 and second 12 ends of the duct section 12 is provided with flange or joining profile 23, for example a RJFP 30 profile, to facilitate connection to a corresponding flange or joining profile of an adjacent duct section (not shown) to which the duct section is to be connected as part of a duct system. The duct section 10 is supported, for example by hangers (not shown) secured to a ceiling and is arranged to pass through an opening in a wall 24 which provides a partition of a building. Beads of an intumescent material provide a seal 25 across a gap between the partition wall 24 and an exterior surface 26 of the duct section 10. The exterior surface 26 of the duct section is provide by a tape or foil (not shown) which may be provided by being wrapped around the duct section 10.

The duct section 10 has a length l_{d} of 1500 mm (the maximum length of such duct sections is typically 2000 mm), and the interior air duct passageway 13 has a height h_{d} of 300 mm and a width w_{d} of 500 mm. The length lₚ of the passage through the partition wall 24 is 100 mm (this is typically for EI 30 rated systems; the length of the passage through the partition may be greater, notably for higher fire class rated systems).

At each of the four side surfaces of the duct section 10, respective pairs of mineral wool insulation panels 30, 31 are arranged to provide the mineral wool thermal insulation sheathing 16. Each such mineral wool insulation panel comprises i) a cut-out section 32 to accommodate the mineral wool stiffener and ii) an overlying mineral wool insulator portion 33 which overlies the mineral wool stiffener in a radial direction. The overlying mineral wool insulators together overlie the entirety of the mineral wool stiffener. The mineral wool thermal insulation sheathing 16 is secured to the metal duct section by pins or mechanical fasteners (not shown). The overall thickness tᵢ of mineral wool insulation panels is 60 mm and the thickness of cut-out section 32 is 30 mm.

Initial testing and simulations of duct sections configured as described above have shown the fire classes set out in Table 2.

| Table 2 | | |
|---|---|---|
| Fire class | Density of mineral wool of mineral wool stiffener | Density of mineral wool of mineral wool thermal insulation sheathing and overlying mineral wool insulator |
| EI 30 | 180 kg/m³ | 70 kg/m³ |
| EI 60 | 170 kg/m³ | 120 kg/m³ |

Alternatively, the overall thickness tᵢ of mineral wool insulation panels may be arranged to be 100 mm and the thickness of cut-out section 32 (when present) is made to accommodate the thickness of the mineral wool stiffener.

### List of reference numbers:

- 10: duct section
- 11: first end of duct section
- 12: second end of duct section
- 13: interior air duct passageway
- 14: metal duct section
- 15: external periphery of metal duct section
- 16: mineral wool thermal insulation sheathing
- 17: mineral wool stiffener
- 18: stiffener adhesive
- 19: mineral wool stiffener panel
- 20: mineral wool stiffener panel
- 21: mineral wool stiffener panel
- 22: mineral wool stiffener panel
- 23: duct flange or profile
- 24: wall
- 25: seal
- 26: exterior surface of the duct section
- 27: stiffener panel abutment
- 28: edge surface of stiffener panel
- 29: major surface of stiffener panel
- 30: panel of mineral wool thermal insulation sheathing
- 31: panel of mineral wool thermal insulation sheathing
- 32: cut-out section of mineral wool thermal insulation sheathing
- 33: overlying mineral wool insulator portion
- I: a lengthwise axis
- l_{d}: duct length
- h_{d}: height of interior air duct passageway
- w_{d}: width of interior air duct passageway
- lₚ: length through partition wall
- lₛ: length of mineral wool stiffener
- tₛ: thickness of mineral wool stiffener
- tᵢ: thickness of mineral wool insulation panels
- p: protruding distance of stiffener

## Claims

1. A duct section (10) having an interior air duct passageway (13) extending along a lengthwise axis (I) between first (11) and second (12) ends of the duct section and comprising:
- an metal duct section (14) having an external periphery (15) which extends lengthwise between the first and second ends of the duct section;
- a mineral wool thermal insulation sheathing (16) which overlays the external periphery of the metal duct section; and
- a stiffener (17) secured to the external periphery of the metal duct section and configured to prevent deformation of a portion of the length of the duct section when subjected to fire conditions;
**characterised in that**
the stiffener comprises a mineral wool stiffener (17) arranged at and secured to the external periphery (15) of the metal duct section (10), notably wherein the mineral wool of the mineral wool stiffener (17) has a density in the range 140 kg/m³ to 220 kg/m³, preferably 160 kg/m³ to 200 kg/m³.

2. A duct section (10) in accordance with claim 1,
wherein the stiffener is selected from:
2.1 a stiffener which consists of the mineral wool stiffener (17), notably wherein the duct section has a fire rating of EI30 and the stiffener consists of the mineral wool stiffener; and
2.2 a mineral wool stiffener (17) which comprises a non-metallic stiffening element, notably in which the mineral wool stiffener consists of the mineral wool and the non-metallic stiffening element, preferably in which the non-metallic stiffening element is provided at one or more surfaces of the mineral wool of the mineral wool stiffener and/or within the mineral wool of the mineral wool stiffener.

3. A duct section (10) in accordance with claim 1 or claim 2,
wherein the mineral wool thermal insulation sheathing (16) comprises an overlying mineral wool insulator (33) which overlies the mineral wool stiffener (17) in a radial direction, preferably wherein the overlying mineral wool insulator overlies the entirety of the mineral wool stiffener.

4. A duct section (10) in accordance with any preceding claim, wherein the duct section has one of the following features:
4.1 wherein the mineral wool stiffener (17) has a higher tensile strength than the mineral wool thermal insulation sheathing (33);
4.2 wherein the mineral wool stiffener (17) has a higher tensile strength than the overlying mineral wool insulator (33);
4.3 wherein the mineral wool stiffener (17) has a higher tensile strength than the mineral wool thermal insulation sheathing (16) and a higher tensile strength than the overlying mineral wool insulator (33).

5. A duct section (10) in accordance with any preceding claim, wherein the duct section has one of the following features:
5.1 wherein the mineral wool of the mineral wool stiffener (17) has a higher density than the mineral wool of the mineral wool thermal insulation sheathing (16), notably a density that is higher by at least 10 kg/m³;
5.2 wherein the mineral wool of the mineral wool stiffener (17) has a higher density than the mineral wool of the overlying mineral wool insulator (33), notably a density that is higher by at least 10 kg/m³;
5.3 wherein the mineral wool of the mineral wool stiffener (17) has a higher density than the mineral wool of the mineral wool thermal insulation sheathing (16), notably a density that is higher by at least 10 kg/m³, and a higher density than the mineral wool of the overlying mineral wool insulator (33), notably a density that is higher by at least 10 kg/m³.

6. A duct section (10) in accordance with any preceding claim, wherein the duct section has one of the following features:
6.1 wherein the mineral wool stiffener (17) has a lower thermal conductivity λ than the mineral wool thermal insulation sheathing (16) when measured at 500°C in a direction perpendicular to the lengthwise axis (I) of the duct section;
6.2 wherein the mineral wool stiffener (17) has a lower thermal conductivity λ than the overlying mineral wool insulator (33) when measured at 500°C in a direction perpendicular to the lengthwise axis (I) of the duct section;
6.3 wherein the mineral wool stiffener (17) has a lower thermal conductivity λ than the mineral wool thermal insulation sheathing (16) when measured at 500°C in a direction perpendicular to the lengthwise axis of the duct section and a lower thermal conductivity λ than overlying mineral wool insulator (33) when measured at 500°C in a direction perpendicular to the lengthwise axis (I) of the duct section.

7. A duct section (10) in accordance with any preceding claim, wherein the mineral wool stiffener (17) is secured to the external periphery (15) of the metal duct by an adhesive (18) , preferably an inorganic adhesive, more preferably a ceramic based adhesive or a silicate adhesive, notably wherein the adhesive is arranged between the external periphery (15) of the metal duct and a major surface (29) of the mineral wool stiffener (17) which faces towards the metal duct section (14).

8. A duct section (10) in accordance with any preceding claim, wherein the mineral wool stiffener (17) provides a continuous belt (19,20,21,22) which encircles the external periphery (15) of the metal duct section (14) at at least one portion along its length.

9. A duct section (10) in accordance with any preceding claim, wherein the mineral wool stiffener (17) is provided by one or more mineral wool stiffener panels(19,20,21,22), each of which is secured to the external periphery of the metal duct section, notably wherein the duct section has a rectangular cross section which is perpendicular to the lengthwise axis and the mineral wool stiffener (17) comprises four mineral wool panels (19,20,21,22), each of which is secured to a respective face of the external periphery of the metal duct section..

10. A duct section (10) in accordance with any preceding claim, wherein the duct section has one of the following features:
10.1 wherein the mineral wool of the mineral wool thermal insulation sheathing (16) has a density in the range 50 kg/m³ to 180 kg/m³, preferably 60 kg/m² to 120 kg/m³;
10.2 wherein the mineral wool of the overlying mineral wool insulator (33) has a density in the range 50 kg/m³ to 180 kg/m³, preferably 60 kg/m² to 120 kg/m³;
10.3. wherein the mineral wool of the mineral wool thermal insulation sheathing (16) has a density in the range 50 kg/m³ to 180 kg/m³, preferably 60 kg/m² to 120 kg/m³, and the mineral wool of the overlying mineral wool insulator (33) has a density in the range 50 kg/m³ to 180 kg/m³, preferably 60 kg/m² to 120 kg/m³.

11. A duct section (10) in accordance with any preceding claim, wherein:
- the thickness of the mineral wool stiffener (tₛ) in a direction perpendicular to the lengthwise axis (I) of the duct section is in the range 20 - 40 mm; and
- the length of the mineral wool stiffener (lₛ) in a direction parallel to the lengthwise axis (I) of the duct section is in the range 300 - 700 mm.

12. A duct section (10) in accordance with any preceding claim, wherein the thickness of the mineral wool thermal insulation sheathing (tᵢ) is in the range 50 - 110 mm, notably selected from a thickness of 50 -70 mm and a thickness of 90-110 mm.

13. A duct section (10) in accordance with any preceding claim, wherein the duct section has a fire class of EI 30, preferably of at least EI 30, more preferably at least EI 60.

14. A duct section in accordance with any preceding claim, wherein the duct section is arranged in a building and passes through a partition of the building, notably wherein the duct section is configured so that the mineral wool stiffener (17) passes through the partition (24) and protrudes on each side of the partition by a distance (p) in the range 100 mm - 300 mm, preferably 150 mm - 250 mm, along the lengthwise axis (I) of the duct section.

15. A method of providing a duct section (10) in accordance with any preceding claim comprising :
- providing the metal duct section (14);
- subsequently, arranging and securing the mineral wool stiffener (17) at the external periphery of the metal duct section;
- subsequently, arranging the mineral wool thermal insulation sheathing (16) to overlay the external periphery (15) of the metal duct section (14) and preferably arranging the overlying mineral wool insulator (33) to overlie the mineral wool stiffener (17) in a radial direction, notably where the method further comprising:
- arranging the duct section (10) so that it passes through a partition (24) of a building with a gap provided between an exterior surface of the duct section (26) and the partition (24) in a direction perpendicular to the lengthwise axis (I) of the duct section; and
- subsequently arranging a seal (25) , preferably comprising an intumescent material, to seal the gap.
